# EUROPÄISCHE PATENTSCHRIFT

(11) **EP 0 592 853 B1**
(45) Veröffentlichungstag und Bekanntmachung des Hinweises auf die Patenterteilung: **17.04.1996**
(21) Anmeldenummer: 93115511.3
(22) Anmeldetag: 25.09.1993
(51) Int. Cl.: B23Q 9/00, B25F 5/02

(54) **Führungsvorrichtung für eine Handwerkzeugmaschine**
Guiding device for a hand-held machine tool
Dispositif de guidage pour une machine-outil à main

(30) Priorität: 14.10.1992 DE 4234554
(43) Veröffentlichungstag der Anmeldung: 20.04.1994
(73) Patentinhaber: ROBERT BOSCH GMBH, D-70442 Stuttgart (DE)
(72) Erfinder: Berger, Günther, Elek. Ing., D-73274 Notzingen (DE)

(56) Entgegenhaltungen:
- EP-A- 0 062 379
- DE-U- 8 618 124
- FR-A- 2 490 137
- US-A- 5 103 566

## Beschreibung

Die Erfindung geht aus von einer Führungsvorrichtung für eine Handwerkzeugmaschine, z.B. elektrisch oder pneumatisch angetriebene Oberfräse, Nager oder Nippler, Stichsäge od.dgl.,der im Oberbegriff des Anspruchs 1 definierten Gattung.

Bei einer derartigen bekannten Führungseinrichtung für eine Oberfräse (DE 39 17 812 C2) weist die Führungsvorrichtung einen zirkelähnlichen Führungsarm, dessen geometrische Achse die des Werkzeugs normal schneidet, und eine Zirkelspitze auf, die im wesentlichen eine axiale Verlängerung eines Handgriffs ist, der am Führungsarm verschiebbar und arretierbar angeordnet ist. Zusätzlich ist zwischen dem Handgriff und dem Führungsarm ein Anschlagträger zum Führen der Oberfräse entlang einer im wesentlichen horizontal gekrümmten Führungskante lösbar befestigt, und zwar wechselweise zum Fräsen von Kreisen und zum Fräsen von durch Schablonen vorgegebenen Kurven. Mit dieser Führungsvorrichtung kann die Oberfräse sehr schnell und genau auf Kreisbahnen mit verschiedenen Radien eingeteilt werden. Außerdem ist damit auch ein schneller Wechsel auf Arbeiten möglich, bei denen die Maschine an Schablonen geführt wird, die gerade oder gekrümmt in der Bearbeitungsebene angeordnet sind.

Durch die DE-U-86 18 124 ist eine Vorrichtung bekannt, die wie ein bei Handkreissägen bekannten Seitenanschlag an einer Handbohr- oder Handfräsmaschine befestigbar ist. Die Vorrichtung trägt Befestigungsmittel zur Aufnahme unterschiedlicher Anschlagleisten. Die Anschlagleisten sind passend gegenüber den Befestigungsmitteln der Vorrichtung ausgestaltet, unterscheiden sich aber untereinander hinsichtlich ihres Querschnittprofils. Die Querschnittprofile der Anschlagleisten sind an unterschiedliche Fensterprofile angepaßt, zu deren Bearbeitung sie bündig, längsverschiebbar in die Fensterprofile zur Anlage gebracht werden müssen. Zur Bearbeitung unterschiedlicher Fensterprofile ist jeweils ein Wechsel der Anschlagleiste notwendig, damit eine optimale Führung der Bohr- oder Fräsmaschine gewährleistet ist.

### Vorteile der Erfindung

Die erfindungsgemäße Führungsvorrichtung für eine Handwerkzeugmaschine mit den Merkmalen des Anspruchs 1 hat den Vorteil, daß sie für unterschiedliche Bearbeitungsvorgänge der Handwerkzeugmaschine, wie Kreisschneiden, Parallelschneiden mit Führungslineal und Parallelschneiden mit Anschlagkante, uneingeschränkt brauchbar ist. Ein Umstellen der Führungsvorrichtung auf den jeweils gewünschten Arbeitsvorgang der Handwerkzeugmaschine ist schnell und einfach möglich. Gesonderte Werkzeuge zur Umstellung der Führungsvorrichtung sind nicht nötig. Alle Führungselemente für die verschiedenen Arbeitsvorgänge sind im Revolverkopf zusammengefaßt und können durch eine einfache Drehbewegung des Revolverkopfs in ihre Wirklage gebracht werden. Damit wird ein Auswechseln der Führungselemente beim Wechseln des Arbeitsvorganges vermieden, so daß die Führungselemente auch nicht verlorengehen oder verlegt werden können. Der Gebrauch der Führungsvorrichtung ist für jeden Laien ohne weiteres ersichtlich und ist in keiner Weise erklärungsbedürftig.

Durch die in den weiteren Ansprüchen aufgeführten Maßnahmen sind vorteilhafte Weiterbildungen und Verbesserungen der im Anspruch 1 angegebenen Führungsvorrichtung möglich.

In einer bevorzugten Ausführungsform der Erfindung sind die Abmessungen der Längsnut in der ersten Führungsfläche der Führungsrippe eines auf ein Werkstück aufzuspannendes Führungslineals zu deren Gleitaufnahme angepaßt und die Höhe des Längsstegs in der zweiten Führungsfläche wenig größer bemessen als die für die Handwerkzeugmaschine zulässige Werkstückdicke. Die Drehlagerung des Revolverkopfes ist dabei mit Exzentrität zu den Führungsflächen so vorgenommen, daß die erste Führungsfläche mit Längsnut in ihrer Wirklage einen Abstand vom Führungsarm aufweist, der um die Dicke des Führungslineals kleiner ist als der jeweilige Abstand der in ihrer Wirklage befindlichen zweiten und dritten Führungsfläche vom Führungsarm. Letzterer ist für die zweite und die dritte Führungsfläche gleich groß. Durch die exzentrische Anordnung der Drehachse des Revolverkopfes wird die Höhe des auf das Werkstück aufgespannten Führungslineals kompensiert, so daß in allen drei Stellungen die Führungsflächen lagerichtig zum Schneidwerkzeug und dessen Schneidfläche liegen. Durch die angegebene Bemessung der Höhe des Längsstegs an der zweiten Führungsfläche wird der Notwendigkeit Rechnung getragen, daß beim Parallelschneiden mit Anschlag die Anschlagkante für eine zuverlässige Führung immer etwas größer sein sollte, als die Dicke des zu schneidenden Werkstücks. Der aus der dritten Führungsfläche rechtwinklig vorstehende Führungsstift wird zum Kreisschneiden in eine vorbereitete Bohrung im Werkstück eingesteckt. Er muß daher nicht bewegt werden und ist in den Revolverkopf eingepreßt.

In einer vorteilhaften Ausführungsform der Erfindung ist der Revolverkopf als gleichseitiges Dreieckprisma ausgebildet, dessen Prismenseiten die Führungsflächen bilden. In diesem Fall wird die Exzentrität der Drehlagerung des Revolverkopfes dadurch erzielt, daß die Drehachse des Revolverkopfes um ein definiertes Maß aus der Mittelachse des Dreieckprismas zu der die Längsnut enthaltenen Führungsfläche hin verschoben ist. Die Mittelachse des Dreieckprismas wird durch die Schnittachse der durch die Mittelsenkrechten der Prismenquerschnittsfläche verlaufenden Ebenen festgelegt. Die Verschiebung erfolgt entlang der Ebene, die senkrecht zu der die Längsnut enthaltenden Führungsfläche verläuft.

In einer weiteren Ausführungsform der Erfindung sind in mindestens einer der beiden Stirnseiten des als Dreieckprisma ausgebildeten Revolverkopfes drei um jeweils 120° Drehwinkel zueinander versetzt angeordnete Arretierbohrungen eingebracht, die mit einem am Führungsarm befestigten Arretierglied kraft- und/oder formschlüssig derart zusammenwirken, daß in jeder Wirklage der drei Führungsflächen das Arretierglied in eine der Arretierbohrungen einfällt. Dadurch wird eine Schnellarretierung des Revolverkopfes in seiner jeweils gewünschten Drehstellung erreicht, die die jeweilige Führungsfläche zuverlässig in ihrer Wirklage hält.

In einer bevorzugten Ausführungsform der Erfindung weist das Führungsglied eine auf dem Führungsarm längsverschiebliche und arretierbare Verschiebmuffe auf, an welcher der Revolverkopf mit rechtwinklig zur Verschieberichtung der Verschiebemuffe ausgerichteter Drehachse gehalten ist. Durch die Verschiebbarkeit des Revolverkopfes längs des Führungsarms können von dem Handwerkzeug zu schneidende Kreisbahnen mit unterschiedlichen Radien sowie verschiedene Breiten bei Parallelschnitten eingestellt werden.

### Zeichnung

Die Erfindung ist anhand von in der Zeichnung dargestellten Ausführungsbeispielen in der nachfolgenden Beschreibung näher erläutert. Dabei zeigen:
- Fig. 1: ausschnittweise eine Seitenansicht einer Handwerkzeugmaschine mit Führungsvorrichtung,
- Fig. 2: ausschnittweise eine perspektivische Darstellung eines Revolverkopfes der Führungsvorrichtung ohne Rad in Fig. 1 gemäß Ansicht Pfeil II in Fig. 1,
- Fig. 3: eine Seitenansicht eines modifizierten Revolverkopfes der Führungsvorrichtung in Fig. 1.

### Beschreibung der Ausführungsbeispiele

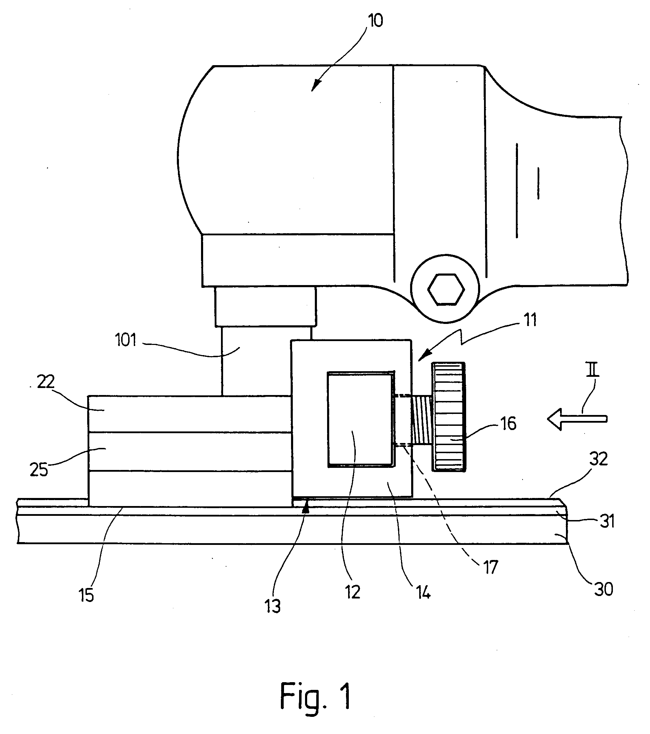

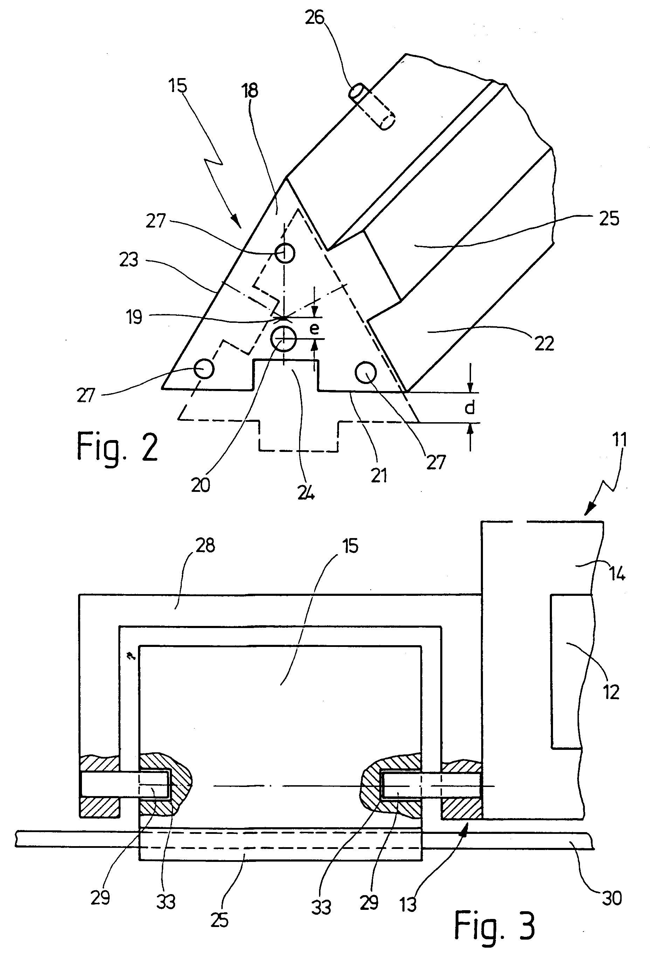

Die in Fig. 1 ausschnittweise zu sehende Handwerkzeugmaschine 10, die hier als Nager oder Nippler ausgebildet ist, weist eine Führungsvorrichtung 11 auf, die - wie hier nicht zu sehen - am Maschinengehäuse beispielsweise, mit einer Spannschelle am Maschinenhals 101, befestigt ist und von diesem rechtwinklig wegsteht. Die Führungsvorrichtung 11 weist einen am Maschinenhals 101 undrehbar gehaltenen Führungsarm 12 und ein am Führungsarm 12 verschieb- und fixierbares Führungsglied 13 auf. Das Führungsglied 13 umfaßt eine auf dem Führungsarm 12 längsverschiebliche Verschiebemuffe 14 und einen senkrecht zur Verschieberichtung der Verschiebemuffe 14 an diese angesetzten Revolverkopf 15. Die Verschiebemuffe 14 umgreift allseitig den Führungsarm 12, der einen rechteckförmigen Querschnitt aufweist. In der gewünschten Stellung kann die Verschiebemuffe 14 auf dem Führungsarm 12 mittels einer Stellschraube 16 festgesetzt werden, die sich durch eine Bohrung 17 mit Innengewinde in der Verschiebemuffe 14 hindurchschraubt und sich stirnseitig an den Führungsarm 12 andrückt. Der Revolverkopf 15 ist an der Verschiebemuffe 14 um eine Drehachse 20 (Fig. 2) drehbar gehalten, wobei er in mehreren, vorzugsweise drei, definierten Drehstellungen, die nach Durchlaufen eines Drehwinkels von jeweils 120° erreicht werden, an der Verschiebemuffe 14 arretiert wird. Die Drehachse 20 erstreckt sich dabei in Längsrichtung des Revolverkopfes 15 und senkrecht zur Verschieberichtung der Verschiebemuffe 14.

Wie insbesondere aus der Darstellung in Fig. 2 ersichtlich ist, ist der Revolverkopf 15 als gleichseitiges Dreieckprisma 18 ausgebildet, dessen drei Prismenseiten je eine Führungsfläche 21 - 23 bilden. Alle Führungsflächen erstrecken sich dabei parallel zur Drehachse 20. In der ersten Führungsfläche 21 ist eine zur Führungsfläche 21 parallele Längsnut 24 eingelassen. Die Abmessungen der Längsnut 24 sind dabei an die Führungsrippe 32 eines in Fig. 1 dargestellten Führungslineals 31 zu deren Gleitaufnahme angepaßt. Das Führungslineal 31 wird beim Parallelschneiden auf das zu schneidende Werkstück 30 (Fig. 1) aufgespannt und die Führungsvorrichtung 11 mit über die Führungsrippe 32 des Führungslineals 31 gesetzter Längsnut 24 auf dem Führungslineal 31 entlanggeführt. Die zweite Führungsfläche 22 weist einen vorstehenden, zur Führungsfläche 22 parallelen Längssteg 25 auf. Die Höhe des Längssteges 25 ist wenig größer bemessen als die für den Nager oder Nippler zugelassene Werkstückdicke. Die dritte Führungsfläche 23 ist mit einem rechtwinklig von der Führungsfläche 23 abstehenden Führungsstift 26 versehen, der in das Dreieckprisma eingepreßt ist. Dieser Führungsstift 26 dient als Zirkelspitze für die Führungsvorrichtung 11 beim Schneiden von Kreisbahnen. Die drei definierten Drehstellungen des Revolverkopfes 15 sind so festgelegt, daß in jeder Drehstellung des Revolverkopfes 15 jeweils eine der Führungsflächen 21 - 23 ihre Wirklage einnimmt, in welcher sie sich zum Auflegen auf das Werkstück 30 bzw. auf das auf dem Werkstück 30 aufgespannten Führungslineal im wesentlichen parallel zum Führungsarm 12 erstreckt. In Fig. 2 befindet sich die erste Führungsfläche 21 mit Längsnut 24 in ihrer Wirkstellung. Wird der Revolverkopf 15 in Fig. 2 im Uhrzeigersinn um seine Drehachse 20 gedreht, so gelangt die zweite Führungsfläche 22 mit Längssteg 25 in ihre Wirklage, wie dies in Fig. 2 strichliniert angedeutet ist. Die Drehlagerung des Revolverkopfes 15 an der Verschiebemuffe 14 ist dabei mit einer Exzentrität e zu den Führungsflächen 21 - 23 so vorgenommen, daß die erste Führungsfläche 21 in ihrer Wirklage einen Abstand vom Führungsarm 12 aufweist, der um die Dicke des für die Verwendung mit der Führungseinrichtung vorgesehenen Führungslineals 31 kleiner ist als der Abstand der in ihrer Wirklage befindlichen zweiten oder dritten Führungsfläche 22,23 vom Führungsarm 12. Die Abstände der in ihrer Wirklage befindlichen Führungsflächen 22,23 vom Führungsarm 12 sind gleich groß. Um diese exzentrische Drehlagerung zu erreichen, ist die Drehachse 20 um ein definiertes Maß e aus der Mittelachse 19 des Dreieckprisma 18 verschoben. Die Mittelachse 19 ist die Schnittachse der drei durch die Mittelsenkrechten der Prismenquerschnittsfläche verlaufenden Ebenen. Die Mittelsenkrechten sind in Fig. 2 strichpunktiert eingezeichnet. Die Verschiebung der Drehachse 20 aus der Mittelachse 19 erfolgt dabei längs der Ebene, die senkrecht auf der ersten Führungsfläche 21 mit Längsnut 24 steht, zu dieser Führungsfläche 21 hin. Durch diese Anordnung der Drehachse 20 hat ausschließlich die in ihrer Wirklage befindliche Führungsfläche 21 mit Längsnut 24 einen kleineren Abstand zum Führungsarm 12. Dadurch wird die Höhe des auf das Werkstück aufgespannten Führungslineals 31 beim Arbeiten mit diesem ausgeglichen, und das Schneidwerkzeug des Nipplers oder Nagers befindet sich auch in dieser Arbeitsstellung der Führungsvorrichtung 11 in der gleichen Lage wie beim Arbeiten mit den anderen beiden Führungsflächen 22,23, die unmittelbar auf die Werkstückoberfläche aufgesetzt und dort entlanggeführt werden.

Zur Schnellarretierung des Revolverkopfes 15 in seinen drei Drehstellungen, in welcher die drei Führungsflächen 21 - 23 jeweils ihre Wirklage einnehmen, sind in der der Verschiebemuffe 14 zugekehrten Stirnseite des Revolverkopfes 15 drei um 120° Drehwinkel zueinander versetzte Arretierbohrungen 27 angeordnet. Diese Arretierbohrungen 27 wirken mit einem an der Verschiebemuffe 14 gehaltenen, hier nicht dargestellten Arretierglied zusammen. Dieses Arretierglied ist an der Verschiebemuffe 14 so angeordnet, daß es in jeweils einer der drei Drehstellungen des Revolverkopfes 15 in eine der drei Arretierbohrungen 27 kraft- und/oder formschlüssig einfällt. Ein solches Arretierglied kann beispielsweise durch eine federbelastete Kugel gebildet werden, die in einer entsprechenden Bohrung in der Verschiebemuffe 14 gehalten ist und von einer Druckfeder gegen die Stirnseite des Revolverkopfes 15 gepreßt wird. Sobald einer der drei Arretierbohrungen 27 mit der Kugel fluchtet, wird diese von ihrer Druckfeder in die Arretierbohrung 27 eingedrückt und verrastet den Revolverkopf 15 an der Verschiebemuffe 14. Mit erhöhter Kraftaufwendung am Revolverkopf 15 in dessen Drehrichtung kann die Kugel wieder aus der Arretierbohrung 27 ausgerückt werden.

Die Wirkungsweise der Führungseinrichtung 11 ist wie folgt:
Soll ein Parallelschnitt mit Anschlag durchgeführt werden, so ist der Revolverkopf 15 in seine in Fig. 2 strichliniert dargestellte Stellung zu drehen, in welcher die zweite Führungsfläche 22 mit Längssteg 25 nach unten weist. Die Führungsfläche 22 wird auf das Werkstück 30, z.B. eine Blechtafel, aufgesetzt, wobei der Längssteg 25 an der Werkstückkante anliegt (vgl. Fig. 3). Durch Verschieben der Verschiebemuffe 14 auf dem Führungsarm 12 wird die Abschnittbreite des Werkstücks 30 eingestellt und danach die Verschiebemuffe 14 mittels der Stellschraube 16 wieder am Führungsarm 12 arretiert. Nunmehr kann mittels des Nagers oder Nipplers der Parallelschnitt durchgeführt werden, wobei der Längssteg 25 an der Werkstückkante entlanggeführt wird.

Soll ein Parallelschnitt mit Hilfe eines auf das Werkstück 30 aufgespannten Führungslineals durchgeführt werden, so ist der Revolverkopf 15 um 120° in seine in Fig. 2 ausgezogen dargestellte Stellung zu drehen. Dabei verschiebt sich der Revolverkopf 15 um einen der Dicke des Führungslineals 31 (Fig.1) entsprechenden Betrag e an der Verschiebemuffe nach oben, wie dies in Fig. 2 ausgezogen dargestellt ist. Nunmehr wird der Revolverkopf 15 mit seiner Längsnut 24 in der Führungsfläche 21 auf die Führungsrippe des Führungslineals aufgesetzt (Fig. 1), wobei die Führungsfläche 21 auf der Oberfläche des Führungslineals 31 bzw. die Längsnut 24 auf der Führungsrippe aufliegt. Durch Verschieben der Verschiebemuffe 14 am Führungsarm 12 wird wiederum die Breite des Parallelabschnittes eingestellt und die Verschiebemuffe 14 wieder am Führungsarm 12 festgesetzt. Nunmehr kann der Parallelschnitt durchgeführt werden, wobei die Führungsvorrichtung 11 auf dem Führungslineal 31 entlanggeführt wird.

Zum Schneiden von Kreisbahnen wird der Revolverkopf 15 soweit gedreht, bis die dritte Führungsfläche 23 mit dem Führungsstift 26 nach unten weist. Wird dabei der Revolverkopf 15 aus der zuvor beschriebenen Stellung mit nach unten weisender ersten Führungsfläche 21 überführt, so schiebt sich der Revolverkopf 15 wiederum um den Betrag e an der Verschiebemuffe 14 nach unten und nimmt wieder die in Fig. 2 strichliniert dargestellte Position ein, wobei allerdings nun die dritte Führungsfläche 23 mit Führungsstift 26 sich in ihrer Wirklage befindet und nach unten weist. Der Führungsstift 26 wird in eine im Werkstück 30 vorbereitete Bohrung eingesetzt und die Führungsfläche 23 auf die Werkstückoberfläche aufgelegt. Nunmehr wird durch Verschieben der Verschiebemuffe 14 am Führungsarm 12 der gewünschte Radius der zu schneidenden Kreisbahn eingestellt und dann die Verschiebemuffe 14 wieder am Führungsarm 12 festgesetzt. Nunmehr wird die Kreisbahn geschnitten, wobei die Führungsvorrichtung 11 auf der Werkstückoberfläche um den Führungsstift 26 gedreht wird.

In Fig. 3 ist eine modifizierte Führungsvorrichtung 11 ausschnittweise dargestellt. Der einzige Unterschied zu der vorstehend beschriebenen Führungseinrichtung 11 besteht darin, daß der Revolverkopf 15 an seinen beiden Stirnseiten von einem Bügel 28 übergriffen wird, der seinerseits an der Verschiebemuffe 14 starr befestigt ist. Die Drehlagerung des Revolverkopfes 15 im Bügel 28 erfolgt mittels zweier Bolzen 29, die aus dem Bügel 28 axial vorstehen und stirnseitig in entsprechende Lagerbohrungen 33 im Revolverkopf 15 hineinragen. Die Arretierung des Revolverkopfes 15 wird am Bügel 28 vorgenommen. Der Revolverkopf 15 in der Darstellung in Fig. 3 nimmt diejenige Stellung ein, in welcher die Führungsfläche 22 auf der Oberfläche des Werkstücks 30 auf und deren Längssteg 25 an der Werkstückkante anliegt. Für den Parallelschnitt wird der Längssteg 25 an der Werkstückkante entlanggeführt.

## Patentansprüche

1. Führungsvorrichtung für eine Handwerkzeugmaschine, z.B. elektrisch oder pneumatisch angetriebene Oberfräse, Nager oder Nippler, Stichsäge od.dgl., mit einem am Maschinengehäuse (101) starr befestigten Führungsarm (12) und einem am Führungsarm (12) verschieb- und fixierbaren Führungsglied (13), dadurch gekennzeichnet, daß das Führungsglied (13) einen um eine Drehachse (20) drehbaren, in mehreren, vorzugsweise drei, definierten Drehstellungen arretierbaren Revolverkopf (15) mit einer der Anzahl seiner Drehstellungen entsprechenden Zahl von um definierte Drehwinkel zueinander versetzten, zur Drehachse (20) parallelen Führungsflächen (21-23) aufweist, von denen die erste Führungsfläche (21) mit einer eingelassenen, zur Führungsfläche (21) parallelen Längsnut (24), die zweite Führungsfläche (22) mit einem vorstehenden, zur Führungsfläche (22) parallelen Längssteg (25) und die dritte Führungsfläche (23) mit einem davon rechtwinklig abstehenden Führungsstift (26) versehen ist.

2. Vorrichtung nach Anspruch 1, dadurch gekennzeichnet, daß die definierten Drehstellungen des Revolverkopfes (15) so festgelegt sind, daß in den Drehstellungen jeweils eine der Führungsflächen (21-23) ihre Wirklage einnimmt, in welcher sie sich zum Auflegen auf ein Werkstück (30) bzw. auf ein auf dem Werkstück (30) aufgespanntes Führungslineal (31) im wesentlichen parallel zum Führungsarm (12) erstreckt.

3. Vorrichtung nach Anspruch 2, dadurch gekennzeichnet, daß die Längsnut (25) in der ersten Führungsfläche (21) zum im wesentlichen spielfreien, gleitbaren Übergreifen einer Führungsrippe (32) des auf ein Werkstück (30) aufgespannten Führungslineals (32) dient, daß die Höhe des Längsstegs (25) in der zweiten Führungsfläche (22) im wesentlichen so groß ist wie die für die Bearbeitung zugelassene maximale Werkstückdicke und daß die Drehlagerung des Revolverkopfs (15) mit einer Exzentrizität (e) gegenüber den Führungsflächen (21, 22, 23) so vorgenommen ist, daß die erste Führungsfläche (21) in ihrer Wirklage einen Abstand von der Drehachse (20) hat, der kleiner ist, insbesondere um die Dicke (d) des Führungslineals (31), als der Abstand der jeweils in ihrer Wirklage befindlichen zweiten und dritten Führungsfläche (22, 23) von der Drehachse (20).

4. Vorrichtung nach Anspruch 3, dadurch gekennzeichnet, daß der Revolverkopf (15) als gleichseitiges Dreieckprisma ausgebildet ist, dessen Prismenseiten die Führungsflächen (21-23) bilden, und daß die Drehache (20) des Revolverkopfes (15) um ein definiertes Maß (e) aus der Mittelachse (19) des Dreieckprismas (18), die durch die Schnittachse von durch die Mittelsenkrechten der Prismenquerschnittsfläche verlaufenden Ebenen festgelegt ist, zu der die Längsnut (24) enthaltenden ersten Führungsfläche (21) hin entlang der zu dieser Führungsfläche (21) senkrechten, durch die Mittelsenkrechte verlaufenden Ebene verschoben ist.

5. Vorrichtung nach Anspruch 4, dadurch gekennzeichnet, daß in mindestens einer der beiden Stirnseiten des Revolverkopfes (15) um jeweils 120° Drehwinkel zueinander versetzt angeordnete Arretierbohrungen (27) eingebracht sind, die mit einem mit dem Führungsarm (12) verbundenen Arretierglied kraft- und/oder formschlüssig derart zusammenwirken, daß in jeder Wirklage der drei Führungsflächen (21-23) das Arretierglied in eine der Arretierbohrungen (27) einfällt.

6. Vorrichtung nach einem der Ansprüche 1 - 5, dadurch gekennzeichnet, daß das Führungsglied (13) eine auf dem Führungsarm (12) längsverschiebliche und arretierbare Verschiebemuffe (14) aufweist, an welcher der Revolverkopf (15) mit rechtwinklig zur Verschieberichtung der Verschiebemuffe (14) ausgerichteter Drehachse (20) gehalten ist.

7. Vorrichtung nach Anspruch 6, dadurch gekennzeichnet, daß der Revolverkopf (15) mit seiner einen Stirnseite freikragend an der Verschiebemuffe (14) gelagert ist.

8. Vorrichtung nach Anspruch 6, dadurch gekennzeichnet, daß der Revolverkopf (15) in einem seine beiden Stirnseiten übergreifenden Bügel (28) drehbar aufgenommen ist, der starr an der Verschiebemuffe (18) befestigt ist.

## Claims

1. Guide device for a hand-held machine tool, for example an electrically or pneumatically driven top milling cutter, nail driver or nipple fitter, compass saw or the like, with a guide arm (12) rigidly fastened to the machine housing (101) and with a guide member (13) displaceable and fixable on the guide arm, characterized in that the guide member (13) has a turret head (15), rotatable about an axis of rotation (20), lockable in a plurality of, preferably three, specific rotary positions and having a number, corresponding to the number of its rotary positions, of guide faces (21-23) which are offset at specific angles of rotation relative to one another and are parallel to the axis of rotation (20) and of which the first guide face (21) is provided with a set-in longitudinal groove (24) parallel to the guide face (21), the second guide face (22) is provided with a projecting longitudinal web (25) parallel to the guide face (22) and the third guide face (23) is provided with a guide stud (26) projecting therefrom at right angles.

2. Device according to Claim 1, characterized in that the specific rotary positions of the turret head (15) are fixed in such a way that, in each of the rotary positions, one of the guide faces (21-23) assumes its operative position, in which it extends essentially parallel to the guide arm (12) for the purpose of resting on a workpiece (30) or on a guide rule (31) clamped on the workpiece (30).

3. Device according to Claim 2, characterized in that the longitudinal groove (25) in the first guide face (21) serves for engaging slideably in an essentially play-free manner over a guide rib (32) of the guide rule (32) clamped on to a workpiece (30), in that the height of the longitudinal web (25) in the second guide face (22) is essentially as large as the maximum workpiece thickness permitted for machining, and in that the rotary mounting of the turret head (15) is carried out with an eccentricity (e) relative to the guide faces (21, 22, 23) in such a way that the first guide face (21) is, in its operative position, at a distance from the axis of rotation (20) which is smaller, particularly by the thickness (d) of the guide rule (31), than the distance of the second and third guide faces (22, 23), located in each case in their operative position, from the axis of rotation (20).

4. Device according to Claim 3, characterized in that the turret head (15) designed as an equilateral triangular prism, the prism sides of which form the guide faces (21-23), and in that the axis of rotation (20) of the turret head (15) is displaced by a specific amount (e) out of the mid-axis (19) of the triangular prism (18), determined by the axis of intersection of planes extending through the mid-perpendicular of the cross-sectional face of the prism, towards the first guide face (21) containing the longitudinal groove (24), along the plane perpendicular to this guide face (21) and extending through the mid-perpendicular.

5. Device according to Claim 4, characterized in that locking bores (27) arranged offset relative to one another in each case at an angle of rotation of 120° are made in at least one of the two end faces of the turret head (15), the said locking bores cooperating non-positively and/or positively with a locking member connected to the guide arm (12), in such a way that, in each operative position of the three guide faces (21-23), the locking member falls into one of the locking bores (27).

6. Device according to one of Claims 1 to 5, characterized in that the guide member (13) has a sliding sleeve (14) which is longitudinally displaceable and lockable on the guide arm (12) and on which the turret head (15) is held with the axis of rotation (20) aligned at right angles to the direction of displacement of the sliding sleeve (14).

7. Device according to Claim 6, characterized in that the turret head (15) is mounted with one of its end faces on the sliding sleeve (14) in an overhung manner.

8. Device according to Claim 6, characterized in that the turret head (15) is rotatably received in a stirrup (28) which engages over its two end faces and which is rigidly fastened to the sliding sleeve (18).

## Revendications

1. Dispositif de guidage pour une machine-outil à main comme par exemple une fraise de surface entraînée électriquement ou pneumatiquement, une rogneuse ou une machine à faire des niples, une scie sauteuse ou équivalent, comportant un bras de guidage (12) fixé rigidement au boîtier de machine (101) et un élément de guidage coulissant(13) pouvant être bloqué sur le bras de guidage (12), caractérisé en ce que l'élément de guidage (13) présente une tourelle (15) rotative autour d'un axe de rotation (20) pouvant être bloqué en plusieurs, de préférence trois, positions de rotation définies, la tourelle (15) présentant un nombre de surfaces de guidage (21, 23) parallèles à l'axe de rotation (20) correspondant au nombre de ses positions de rotation et décalées les unes par rapport aux autres d'un angle de rotation défini, la première de ces surfaces de guidage (21) ayant une rainure longitudinale en creux parallèle à la surface de guidage (21), la seconde de ces surfaces de guidage ayant une nervure longitudinale en saillie (25) parallèle à la surface de guidage (22) et la troisième surface de guidage (23) ayant un goujon de guidage (26) en saillie orthogonalement à cette surface (26).

2. Dispositif selon la revendication 1, caractérisé en ce que les positions de rotation définies de la tourelle (15) sont déterminées de telle sorte qu'à chacune de ces positions de rotation, une des surfaces de guidage (21-23) prend sa position de fonctionnement dans laquelle elle s'étend sensiblement parallèlement au bras de guidage (12) sur une pièce à usiner (30) respectivement sur une règle de guidage (31) fixée sur la pièce à usiner (30).

3. Dispositif selon la revendication 2, caractérisé en ce que la rainure longitudinale (24) de la première surface de guidage (21) reçoit pratiquement sans jeu à chevauchement coulissant une nervure de guidage (32) de la règle de guidage (31) en ce que la hauteur de la nervure longitudinale (25) de la seconde surface de guidage (22) est sensiblement la même que l'épaisseur maximale autorisée de la pièce, en ce que le palier de rotation de la tourelle (15) est excentré par rapport aux surfaces de guidage (21, 22, 23) d'une excentricité "e" telle que la première surface de guidage (21) présente dans sa position de fonctionnement un intervalle par rapport à l'axe de rotation (20) qui est plus petit, en particulier de l'épaisseur "d" de la règle de guidage (31), que l'intervalle entre les seconde et troisième surface de guidage (22, 23) dans leur position de fonctionnement et l'axe de rotation (20).

4. Dispositif selon la revendication 3, caractérisé en ce que la tourelle (15) est réalisée sous la forme d'un prisme triangulaire équilatéral dont les côtés constituent les surfaces de guidage (21-23) et ce que l'axe de rotation (20) de la tourelle (15) est décalé, par rapport à l'axe médian (19) défini par l'intersection des plans médiateurs des côtés du prisme du triangle, en direction de la première surface de guidage (21) munie de la rainure longitudinale (24) le long du plan médiateur de cette surface (21).

5. Dispositif selon la revendication 4, caractérisé en ce que des perçages de blocage (27) décalés entre eux d'un angle de 120° sont réalisés dans au moins une des deux faces frontales de la tourelle (15), ces perçages coopèrant par force et/ou par forme avec l'élément de blocage de sorte que dans chaque position d'utilisation des trois surfaces de guidage (21-23), l'élément de blocage vienne dans l'un des perçages de blocage (27).

6. Dispositif selon l'une des revendications 1 à 5, caractérisé en ce que l'élément de guidage (13) présente un manchon (14) coulissant longitudinalement et pouvant être bloqué sur le bras de guidage (12), manchon portant la tourelle (15), par son axe de rotation (20) qui est orthogonal à la direction de coulissement du manchon (14).

7. Dispositif selon la revendication 6, caractérisé en ce que la tourelle (15) est montée en porte à faux par l'une de ses surfaces frontales sur le manchon coulissant (14).

8. Dispositif selon la revendication 6, caractérisé en ce que la tourelle (15) est maintenue rotative par un étrier (28) enserrant ses deux faces frontales, cet étrier étant fixé rigidement au manchon coulissant (14).
